# FASCICULE DE BREVET EUROPEEN

(11) **EP 3 583 017 B1**
(45) Date de publication et mention de la délivrance du brevet: **23.12.2020**
(21) Numéro de dépôt: 18704277.5
(22) Date de dépôt: 19.01.2018
(51) Int. Cl.: B62D 21/11, B62D 21/12, B62D 27/06

(54) **AGENCEMENT DE CARROSSERIE D'UN VEHICULE, NOTAMMENT AUTOMOBILE**
KAROSSERIEANORDNUNG FÜR FAHRZEUG, INSBESONDERE KRAFTFAHRZEUG
VEHICLE, NOTABLY MOTOR VEHICLE, BODYWORK ARRANGEMENT

(30) Priorité: 15.02.2017 FR 1751227
(43) Date de publication de la demande: 25.12.2019
(73) Titulaire: PSA Automobiles SA, 78300 Poissy (FR)
(72) Inventeur: LE GUILLOU, Olivier, 25420 Courcelles les Montbeliard (FR); KONDRATOFF, Axel, 25150 Dambelin (FR)
(86) Numéro de dépôt international: PCT/FR2018/050141
(87) Numéro de publication internationale: WO 2018/150115

(56) Documents cités:
- FR-A1- 2 927 846
- FR-A1- 3 020 329

## Description

L'invention concerne un agencement de carrosserie d'un véhicule, notamment automobile, et concerne plus particulièrement la fixation des allonges formant longerons de la carrosserie au berceau du véhicule.

Un véhicule automobile comprend généralement un berceau dans lequel est ancré le moteur, le berceau étant relié au châssis du véhicule par l'intermédiaire de biellettes. Le berceau est en outre prolongé vers l'avant du véhicule par des allonges formant longerons de la carrosserie. Les triangles de suspension du véhicule sont en outre fixés sur le berceau.

De manière connue en soi, les allonges formant longerons sont fixées au niveau de l'une de leurs extrémités au berceau par l'intermédiaire d'un dispositif de fixation comprenant des vis et des écrous. En outre, ce dispositif de fixation est un organe de filtrage qui permet de limiter la transmission des vibrations engendrées par le moteur du berceau à la carrosserie, par l'intermédiaire des allonges formant longerons.

Le document FR2927846 divulgue un tel dispositif de liaison entre les allonges formant longerons et le berceau du véhicule.

Cependant, ce type de liaison comprend un nombre de pièces important, ce qui induit une masse supplémentaire non négligeable et des difficultés de montage et de démontage. Ceci engendre un surcoût en termes de temps d'assemblage et d'entretien et de consommation.

La présente invention a pour but de pallier les inconvénients ci-dessus de l'art antérieur.

Pour atteindre ce but, l'invention concerne un agencement de carrosserie d'un véhicule, notamment automobile, comprenant un berceau solidarisé à un train de roues du véhicule, deux allonges de berceau formant longerons de la carrosserie du véhicule, et deux dispositifs de fixation respectivement d'une extrémité des deux allonges formant longerons au berceau, chaque dispositif de fixation comprenant une partie femelle et une partie mâle apte à s'engager dans la partie femelle, les parties mâle et femelle comprenant des moyens de verrouillage de la partie mâle dans la partie femelle par pivotement de l'allonge formant longeron correspondante d'un angle déterminé autour de son axe longitudinal

Selon une autre particularité, la partie mâle de chaque dispositif de fixation est solidaire de l'extrémité de l'allonge formant longeron correspondante destinée à être fixée au berceau.

Selon une autre particularité, la partie femelle est formée dans une plaque d'appui d'allonge solidaire du berceau.

Selon une autre particularité, la partie femelle est une ouverture circulaire réalisée dans la plaque d'appui d'allonge de berceau et qui comprend des découpes périphériques régulièrement espacées, la partie mâle comprend une paroi plane solidaire de l'extrémité de l'allonge formant longeron correspondante et une bague cylindrique faisant saillie perpendiculairement à la paroi plane et comprenant des ergots périphériques régulièrement espacés et solidaires de la face annulaire externe de la bague, et les ergots périphériques et les découpes périphériques sont de formes conjuguées pour permettre l'engagement de la partie mâle dans la partie femelle et le verrouillage de type baïonnette de la partie mâle dans la partie femelle par pivotement de l'allonge formant longeron correspondante.

Selon une autre particularité, la paroi plane est en appui sur une face correspondante de la plaque d'appui en position verrouillée de la partie mâle dans la partie femelle.

Selon une autre particularité, la paroi plane et la bague sont en matériau élastomère pour constituer un organe de filtrage des vibrations susceptibles d'être transmises du berceau aux allonges formant longerons.

Selon une autre particularité, les ergots périphériques et les découpes périphériques présentent une forme arquée.

Selon une autre particularité, l'angle déterminé est compris entre trente et cinquante degrés.

Selon une autre particularité, l'extrémité de chaque allonge formant longeron opposée à celle fixée au berceau est solidaire d'un support de pare-chocs du véhicule.

L'invention concerne également un véhicule automobile comprenant un agencement de carrosserie tel que décrit précédemment.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lequel :
- La figure 1 représente une vue en perspective de l'extrémité d'une allonge formant longeron à distance d'une plaque d'appui d'allonge de berceau, montrant le dispositif de fixation selon l'invention ;
- La figure 2 représente une vue en perspective de l'allonge formant longeron de la figure 1 engagée dans la plaque d'appui de la figure 1.

En référence aux figures, l'agencement de carrosserie selon l'invention va maintenant être décrit.

Le véhicule automobile comprend un moteur, thermique ou électrique, ancré dans un berceau 1 relié à la carrosserie par l'intermédiaire de biellettes, appelées également « tirants ». En outre, le berceau 1 est solidaire, préférentiellement par vissage à l'aide d'un moyen de fixation 2a du type vis et écrou, d'un train de roues 2 du véhicule.

Le véhicule comprend également deux allonges formant longerons 3 qui s'étendent vers l'avant du véhicule depuis le berceau 1. Les extrémités de chaque allonge formant longeron 3 sont respectivement fixées au support de pare-chocs avant et sur une plaque d'appui d'allonge 6 de berceau 1 par l'intermédiaire d'un dispositif de fixation, cette plaque d'appui 6 étant solidaire du berceau 1 du véhicule par exemple par soudage ou par vissage. En outre, le dispositif de fixation comprend une partie femelle 5 formée dans la plaque d'appui 6 et une partie mâle 4 destinée à s'engager dans la partie femelle 5 et solidaire de l'extrémité de l'allonge formant longeron correspondante 3.

Selon l'invention, les parties mâle 4 et femelle 5 du dispositif de fixation comprennent des moyens de verrouillage de la partie mâle 4 dans la partie femelle 5 par pivotement de l'allonge formant longeron correspondante 3 d'un angle déterminé autour de son axe longitudinal. De manière préférentielle, cet angle déterminé est compris entre trente et cinquante degrés, et encore préférentiellement est de l'ordre de quarante degrés, ce qui correspond à un neuvième de tour de l'allonge formant longeron correspondante 3 autour de son axe longitudinal.

Selon l'invention, la partie femelle 5 des moyens de verrouillage est une ouverture circulaire réalisée dans la plaque d'appui 6. Cette ouverture circulaire 5 peut en outre permettre l'accès au moyen de fixation 2a du berceau 1 au train de roues correspondant 2. L'ouverture circulaire 5 comprend des découpes périphériques 7 régulièrement espacées et présentant une forme arquée.

Selon l'invention, la partie mâle 4 des moyens de verrouillage comprend une paroi plane 8 solidaire de l'extrémité de l'allonge formant longeron correspondante 3, cette paroi plane 8 étant engagée sur l'extrémité de l'allonge formant longeron 3 par l'intermédiaire de pattes de fixation 12. La partie mâle 4 comprend également une bague cylindrique 9 faisant saillie perpendiculairement à la paroi plane 8, cette bague 9 comprenant des ergots périphériques 10 régulièrement espacés et solidaires de la face annulaire externe de la bague 9. En outre, les ergots périphériques 10 présentent une forme arquée.

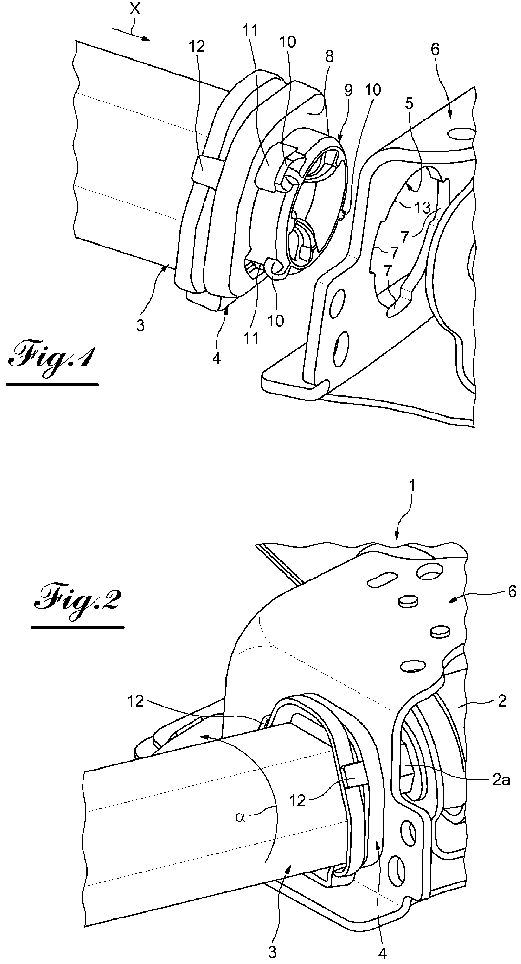

Comme on le voit bien sur la figure 1, les ergots périphériques 10 et les découpes périphériques 9 sont de formes conjuguées pour permettre dans un premier temps l'engagement de la partie mâle 4 dans la partie femelle 5 suite au déplacement en translation de l'allonge formant longeron correspondante selon la direction représentée par la flèche X sur la figure 1. Dans un second temps, le pivotement d'angle déterminé de l'allonge formant longeron 3 autour de son axe longitudinal, comme représenté sur la figure 2 par la flèche courbe *α*, permet un verrouillage de type baïonnette de la partie mâle 4 dans la partie femelle 5.

De manière préférentielle, pour bien fixer l'allonge formant longeron 3 au berceau 1, la bague cylindrique 9 de la partie mâle 4 peut comprendre des surépaisseurs de matière 11 au niveau de la face annulaire externe de la bague 9, ces surépaisseurs 11 étant disposées entre la paroi plane 8 et chaque ergot périphérique 10 en regard de ces derniers. Ainsi, une fois la partie mâle 4 verrouillée dans la partie femelle 5, ces surépaisseurs 11 viennent en appui contre le bord arqué 13 de l'ouverture circulaire 5 de la plaque d'appui 6, entre deux découpes périphériques 7.

En outre, en position verrouillée de la partie mâle 4 dans la partie femelle 5, la paroi plane 8 vient en appui contre la face correspondante de la plaque d'appui 6. De manière à constituer un organe de filtrage des vibrations provenant du moteur et susceptibles d'être transmises du berceau 1 aux allonges formant longerons 3, la paroi plane 8 et la bague cylindrique 9 sont en matériau élastomère, par exemple en caoutchouc.

Ainsi, la présente invention permet de faciliter le montage et le démontage des allonges formant longerons 3 au berceau 1 du véhicule, tout en diminuant le nombre de pièces constituant les dispositifs de fixation, réduisant de fait la masse et les coûts de fabrication et d'utilisation.

La configuration telle que décrite n'est pas limitée au mode de réalisation décrit dans le texte et représenté sur les figures. Elle n'a été donnée qu'à titre d'exemple non limitatif. De multiples modifications peuvent être apportées sans pour autant sortir du cadre de l'invention. Ainsi, on pourrait imaginer que la partie mâle 4 du dispositif de fixation est solidaire de la plaque d'appui 6, tandis que la partie femelle 5 est formée dans l'extrémité de l'allonge formant longeron correspondante 3 destinée à être fixée au berceau 1.

## Revendications

1. Agencement de carrosserie d'un véhicule, notamment automobile, comprenant un berceau (1) solidarisé à un train de roues (2) du véhicule, deux allonges de berceau formant longerons (3) de la carrosserie du véhicule, et deux dispositifs de fixation respectivement d'une extrémité des deux allonges formant longerons (3) au berceau (1), chaque dispositif de fixation comprenant une partie femelle (5) et une partie mâle (4) apte à s'engager dans la partie femelle (5), **caractérisé en ce que** les parties mâle (4) et femelle (5) comprennent des moyens de verrouillage de la partie mâle dans la partie femelle par pivotement de l'allonge formant longeron correspondante (3) d'un angle déterminé autour de son axe longitudinal.

2. Agencement selon la revendication 1, **caractérisé en ce que** la partie mâle (4) de chaque dispositif de fixation est solidaire de l'extrémité de l'allonge formant longeron correspondante (3) destinée à être fixée au berceau (1).

3. Agencement selon la revendication 1 ou 2, **caractérisé en ce que** la partie femelle (5) est formée dans une plaque d'appui d'allonge (6) solidaire du berceau (1).

4. Agencement selon la revendication 3, **caractérisé en ce que** la partie femelle (5) est une ouverture circulaire réalisée dans la plaque d'appui (6) d'allonge de berceau (1) et qui comprend des découpes périphériques (7) régulièrement espacées, **en ce que** la partie mâle (4) comprend une paroi plane (8) solidaire de l'extrémité de l'allonge formant longeron correspondante (3) et une bague cylindrique (9) faisant saillie perpendiculairement à la paroi plane (8) et comprenant des ergots périphériques (10) régulièrement espacés et solidaires de la face annulaire externe de la bague (9), et **en ce que** les ergots périphériques (10) et les découpes périphériques (7) sont de formes conjuguées pour permettre l'engagement de la partie mâle (4) dans la partie femelle (5) et le verrouillage de type baïonnette de la partie mâle dans la partie femelle par pivotement de l'allonge formant longeron correspondante (3).

5. Agencement selon la revendication 4, **caractérisé en ce que** la paroi plane (8) est en appui sur une face correspondante de la plaque d'appui (6) en position verrouillée de la partie mâle (4) dans la partie femelle (5).

6. Agencement selon la revendication 4 ou 5, **caractérisé en ce que** la paroi plane (8) et la bague (9) sont en matériau élastomère pour constituer un organe de filtrage des vibrations susceptibles d'être transmises du berceau (1) aux allonges formant longerons (3).

7. Agencement selon l'une quelconque des revendications 4 à 6, **caractérisé en ce que** les ergots périphériques (10) et les découpes périphériques (7) présentent une forme arquée.

8. Agencement selon l'une quelconque des revendications 1 à 7, **caractérisé en ce que** l'angle déterminé est compris entre trente et cinquante degrés.

9. Agencement selon l'une quelconque des revendications 1 à 8, **caractérisé en ce que** l'extrémité de chaque allonge formant longeron (3) opposée à celle fixée au berceau (1) est solidaire d'un support de pare-chocs du véhicule.

10. Véhicule automobile comprenant un agencement de carrosserie selon l'une quelconque des revendications 1 à 9.

## Patentansprüche

1. Aufbauanordnung eines Fahrzeug, insbesondere ein Kraftfahrzeug, mit einer Docking - Station (1) an einen Radsatzes befestigt (2) des Fahrzeugs, zwei cradle Verlängerungen bildende Seitenelemente (3) des Fahrzeugkörpers, und zwei Geräte jeweils zum Befestigen eines Endes der beiden Verlängerungen bildenden Seitenelemente (3) an die Wiege (1), wobei jede Befestigungsvorrichtung , umfassend einen Buchsenteil (5) und einen männlichen Teil (4) der Lage in dem Aufnahmeteil in Eingriff zu bringen (5)), **dadurch gekennzeichnet, dass** die männlichen Teile (4) und weibliche (5) Mittel zum Arretieren des männlichen Teils in den weiblichen Teil durch Drehung eine des langgestreckten Formungs entsprechende Holms (3) um einen definierten Winkel um seine Längsachse.

2. Anordnung nach Anspruch 1, **dadurch gekennzeichnet, daß** der männliche Teil (4) jeder Befestigungsvorrichtung ist an dem Ende befestigt des entsprechenden Holms Verlängerungs (3) soll an der Wiege befestigt werden (1).

3. Anordnung nach Anspruch 1 oder 2, **dadurch gekennzeichnet, daß** der weibliche Teil (5) ist in geformt einer Platte der Stütz Reichweite (6) integral von Wiege (1).

4. Anordnung nach Anspruch 3, **dadurch gekennzeichnet, daß** der weibliche Teil (5) ist eine kreisförmige Öffnung in gebildeten Plattenstütz (6) der langgestreckten Aufnahmevorrichtung (1) und die beinhaltet Ausschnitte Peripher ic (7) regelmäßig beabstandeten , daß der männliche Teil (4) umfasst, eine Wand p Spur (8) fest mit dem Ende der Verlängerung bildenden Holms entsprechen (3) und einen zylindrischen Ring (9) fai Sant Projizieren senkrecht zur Wand flach (8) und umfassend Umfangsnasen (10), die regelmäßig beabstandet und einstückig mit der äußeren Ringfläche des Rings (9) sind , und indem die Umfangsnasen (10) und die Umfangsausschnitte (7) konjugierte Formen aufweisen für Lassen Sie den männlichen Teil des Eingriffs (4) in den weiblichen Teil (5) und das Verriegeln des Bajonetttyps des männlichen Teils in den weiblichen Teil durch Drehen des Verlängerungsbalkens, der das entsprechende (3) bildet.

5. Anordnung nach Anspruch 4, **dadurch gekennzeichnet, daß** die flache Wand (8) trägt, auf einer entsprechende Fläche der Trägerplatte (6) in der verriegelten Stellung des Steckerteils (4) in dem weiblichen Teil (5).

6. Anordnung nach Anspruch 4 oder 5, **dadurch gekennzeichnet, daß** die flache Wand (8) und der Ring (9) aus elastomerem Material bestehen, um ein Element zum Filtern von Schwingungen zu bilden, die von der Wiege (1) auf die Verlängerungen übertragen werden können bilden Seitenelemente (3).

7. Anordnung nach einer der Ansprüche 4 bis 6, **gekennzeichnet dadurch, daß** die Umfangsnasen (10) und die Umfangsausschnitte (7) eine bogenförmige Form haben.

8. Anordnung nach einer der Ansprüche 1 bis 7, **gekennzeichnet dadurch, daß** der ermittelte Winkel zwischen dreißig und fünfzig Grad liegt.

9. Anordnung nach einer der Ansprüche 1 bis 8, die **dadurch gekennzeichnet ist, daß** das Ende jeder Verlängerung, die einen Holm (3) gegenüber dem an der Wiege (1) befestigten bildet, einstückig mit einer Stoßstangenhalterung der ist Fahrzeug.

10. Kraftfahrzeug mit einer Karosserieanordnung nach einem der Ansprüche 1 bis 9.

## Claims

1. Bodywork arrangement of a vehicle, in particular a motor vehicle, comprising a cradle (1) secured to a wheel set (2) of the vehicle, two cradle extensions forming side members (3) of the vehicle body, and two devices respectively for fixing one end of the two extensions forming side members (3) to the cradle (1), each fixing device comprising a female part (5) and a male part (4) able to engage in the female part (5), **characterized in that** the male parts (4) and female (5) comprise means for locking the male part into the female part by rotation of an elongated forming the corresponding spare (3) by a defined angle around its longitudinal axis .

2. Arrangement according to claim 1, **characterized in that** the male part (4) of each fixing device is secured to the end of the corresponding spar extension (3) intended to be fixed to the cradle (1).

3. Arrangement according to claim 1 or 2, **characterized in that** the female part (5) is formed in a plate of support Reach (6) integral of cradle (1).

4. Arrangement according to claim 3, **characterized in that** the female part (5) is a circular opening formed in the plate support (6) of elongated cradle (1) and which includes cutouts Peripher ic (7) regularly spaced **in that** the male part (4) comprises a flat wall (8) integral with the end of the extension forming corresponding spar (3) and a cylindrical ring (9) fai sant projecting perpendicular to the flat wall (8) and comprising peripheral lugs (10) regularly spaced and integral with the outer annular face of the ring (9), and **in that** the peripheral lugs (10) and the peripheral cutouts (7) are of conjugate shapes for allow the male portion of the engagement (4) into the female part (5) and the locking of the bayonet type of the male part into the female part by rotation of the extension beam forming corresponding (3) .

5. Arrangement according to claim 4, **characterized in that** the flat wall (8) bears on a corresponding face of the support plate (6) in the locked position of the male part (4) in the female part (5).

6. Arrangement according to claim 4 or 5, **characterized in that** the flat wall (8) and the ring (9) are made of elastomeric material to constitute a member for filtering vibrations capable of being transmitted from the cradle (1) to the extensions forming side members (3).

7. Arrangement according to any one of claims 4 to 6, **characterized in that** the peripheral lugs (10) and the peripheral cutouts (7) have an arcuate shape.

8. Arrangement according to any one of claims 1 to 7, **characterized in that** the determined angle is between thirty and fifty degrees.

9. Arrangement according to any one of claims 1 to 8, **characterized in that** the end of each extension forming a spar (3) opposite to that fixed to the cradle (1) is integral with a bumper support of the vehicle.

10. Motor vehicle comprising a bodywork arrangement according to any one of claims 1 to 9.
